# EUROPEAN PATENT APPLICATION

(11) **EP 1 010 371 A1**
(43) Date of publication of application: **21.06.2000**
(21) Application number: 98124006.2
(22) Date of filing: 17.12.1998
(51) Int. Cl.: A23L 1/025, C02F 1/48

(54) **Heat-treatment process for liquids**

(71) Applicant: THE PROCTER & GAMBLE COMPANY, Cincinnati, Ohio 45202 (US)
(72) Inventor: Litke, Manfred, 65529 Waldems (DE); Rümping, Martin, 45968 Gladbeck (DE)
(74) Representative: Kremer, Véronique Marie Joséphine

(57) **Abstract**

The invention relates to a heat-treatment process for liquids, in particular for sterilizing or pasteurizing beverages and other liquid foods, in which the liquid conducted in lines is heated in a heating region (15) to a predetermined temperature appropriate to the heat treatment to be carried out, is held at the temperature reached in a temperature-holding region (16) for a preset time in accordance with the heat treatment to be carried out and is then cooled in a cooling region (17). In order in this process to maintain the mineral content in the desired concentration in the liquid and, in particular, in beverages and other liquid foods, according to the invention it is provided that the liquid which has been magnetized prior to the heating in the heating region (15) is, after the heating, again exposed to a magnetic field (magnetizing unit 25) which magnetizes it.

## Description

The invention relates to a heat-treatment process for liquids, in particular for sterilizing or pasteurizing beverages and other liquid foods.

In the manufacture of liquid foods, in particular in the manufacture and processing of fruit juices, it is necessary to sterilize or at least pasteurize these before or after packaging to ensure their keeping quality until the consumer consumes them, or, in the case of concentrates, until their further processing to fruit juices or fruit juice drinks.

For sterilizing or pasteurizing beverages or the like prior to packaging, these are usually, on flowing through a heat-treatment plant, first heated to a predetermined temperature appropriate to the heat treatment to be carried out, then held at this temperature for a preset time, in order then to be cooled to a temperature suitable for packaging. This heating and cooling can be performed in stages, with further treatment steps, such as homogenization and degassing, for example, being able to be performed between the individual heating or cooling phases.

In the course of this, the problem arises that the lines of a plant for the heattreatment of beverages or the like which bear the liquid product to be treated become, in the course of time blocked, owing to mineral, in particular mineral salt, deposits. These mineral salt deposits impair the sterilization or pasteurization of liquid products, since they impede the heat exchange not only during heating and cooling but also for temperature monitoring, and cause shutdown periods for cleaning the plant. Owing to frequent shutdown periods and the cleaning costs arising simultaneously, the economic efficiency of a plant is considerably lowered.

The difficulties caused by the mineral deposits in heat-treatment plants become more of a problem if mineral-enriched liquids or beverages are to be subjected to a heat treatment.

To prevent the deposition of lime and other minerals present in drinking water, such as magnesium, for example, physical water treatment systems on a magnetic basis are already known (Hydros-Bon® from SAWI, Herwig A. Wiest, Oy-Mittelberg). These water treatment systems consist of a magnetic arrangement which, without dividing the waterline, is arranged around this, so that the water flows through a magnetic field area. Water magnetized in this manner is said to prevent the scaling of boilers, washing machines, percolators, cooking pots, continuous-flow heaters etc., in which it is used.

In addition, an arrangement of ring magnets for magnetizing water is known (Kronenberg, "Vorzüge der magnetischen Wasserbehandlung" [Advantages of magnetic water treatment], published in the journal "Raum und Zeit", ...), which has four annular permanent magnets arranged around a waterline polarized in the direction of flow. The polarization of the magnets in this case is such that they each face one another with the same poles. For concentration of the magnetic flux density, the axial ends of the annular permanent magnets are covered with soft iron rings and a soft iron rod is arranged in the centre of the waterline.

Units of this type may be used both in the home and in industry to prevent lime deposits or to disperse preexisting lime deposits. In this case, the magnetized water is said to retain its ability to degrade deposits for up to two days.

The object underlying the invention is to provide a further heat-treatment process for liquids which at least substantially avoids the reduction of the mineral content of a liquid during the heat treatment.

This object is achieved according to the invention by the heat-treatment process according to Claim 1. Advantageous developments of the invention are described in the subclaims.

According to the invention, therefore, the liquid magnetized upstream of the heating in a heating region is again exposed downstream of the heating to a magnetic field which magnetizes it. This not only ensures that none of the lines bearing the liquid to be treated form deposits which block in the long term, but also the minerals, at least the majority, remain in the desired form in the liquid.

It is particularly advantageous in this case if the liquid to be treated is exposed again to a magnetic field which magnetizes it after each passage through a mechanical transport or treatment unit, and if, in particular, the liquid to be treated which contains undissolved matter is subjected to a mechanical treatment for the uniform mixing of its constituents, in particular to homogenization, and is then magnetized again. In this manner, not only may an adverse effect of the mechanical treatment of the liquid on its magnetization be made up for, but also the desired mineral complexes in the liquid may be further stabilized.

According to the invention, the liquid to be treated is magnetized by a static or alternating magnetic field or by a combination of both. It is particularly advantageous here if the magnetic field used for magnetizing the liquid to be treated is generated using a controllable electromagnetic arrangement, with the strength and/or the frequency of the magnetic field used being adjustable as a function of the flow rate and/or the temperature of the liquid to be treated. In this manner, the magnetization of the liquid to be treated may be adapted simply in accordance with the specific requirements.

In a particularly preferred embodiment of the invention, it is provided that the liquid to be treated is fruit juice, a fruit-juice-based drink or a fruit juice concentrate, the liquid to be treated being enriched with minerals, in particular with minerals in a form utilizable by the human body. The liquid to be treated can have in this case an Mg and/or Ca concentration of from 0.5 g/l to 10.0 g/l, and preferably from 1.0 g/l to 7.0 g/l. In beverages of this type, stabilizing the minerals by magnetic fields after each thermal or mechanical treatment may result in no mineral salts precipitate out and the mineral content is retained in its desired health-promoting manner.

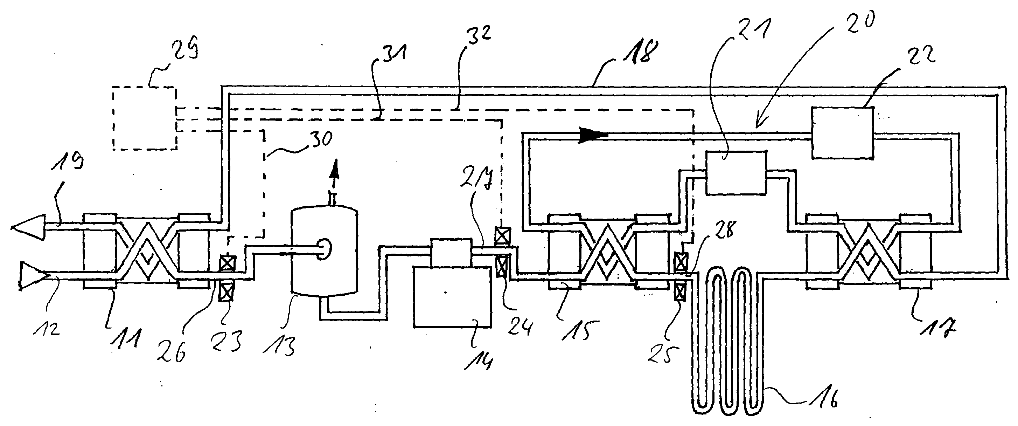

The invention is described in more detail below by way of example with reference to the drawing. In this, the single figure shows a diagrammatic sketch of a heat-treatment plant for liquids.

The heat-treatment plant shown diagrammatically in the drawing comprises a preheating device (11) which is designed as a heat exchanger operating in the countercurrent flow process. A liquid to be treated is fed via an inlet (12) to the preheating device (11), after the preheating is first passed through a degassing station (10) and then through a homogenizer (14). From the homogenizer (14), the liquid to be treated then flows into a main heating device (15) which is followed by a temperature-holding region (16). The pasteurized or sterilized liquid after leaving the temperature-holding region (16) then flows through a cooling device (17), a connection line (18) and the preheating device (11) but now as heating medium, in order then to be fed via an outlet (19) to a filling line or the like.

Whereas in the preheating device (11), the liquid to be treated is preheated using the residual heat of the treated liquid, so that in the return pass the treated, that is to say the sterilized or pasteurized, liquid is cooled to the packaging temperature, a heating/cooling circuit (20) is used to heat the liquid to be treated to the pasteurization or sterilization temperature and for the subsequent cooling. The heating/cooling circuit (20) comprises a heater (21) from which heating liquid flows through the main heating device (15) which is likewise designed as a heat exchanger. The heating liquid which is cooled in the main heating device (15) by heat exchange with the liquid to be heated is then cooled in a cooling unit (22) in order then to be fed as cooling liquid to the cooling device (17). In the cooling device (17), the cooling liquid is heated, while the sterilized or pasteurized liquid is cooled. The cooling liquid preheated in this manner is then returned to the heater (21), in order there to be heated to the temperature required for heating the liquid to be treated in the main heating device (15).

Both the circulation of the heating/cooling liquid in the heating/cooling circuit (20) and the flow of the liquid to be treated through the individual treatment stations are effected by pumps arranged in a suitable manner, but not shown in the drawing.

In the direction of flow of the liquid to be treated, downstream of the preheating device (11), downstream of the homogenizer (14) and downstream of the main heating device (15), magnetizing units (23), (24), (25) are arranged around the respective outlet lines (26), (27), (28) in such a manner that a magnetic field which magnetizes the flowing liquid is generated in the outlet lines (26), (27), (28).

The magnetizing units (23), (24), (25) which can be provided here are, for example, permanent magnets or permanent magnetic arrangements having a multiplicity of individual magnets. However, it is also possible to provide electromagnets in the magnetizing units (23), (24), (25), which electromagnets are then connected to a control unit (29) via leads (30), (31), (32), as is shown in the drawing by dashed lines, in order to be controlled in accordance with the respective operating parameters of the heat-treatment plant, that is to say the respective temperatures and flow velocities.

When electromagnets are used in the magnetizing units (23), (24), (25), it is possible, in particular, to perform the magnetization using an alternating field, so that the liquid to be magnetized is magnetized in a short line region of magnetic fields of alternating polarity.

In the operation of such a heat-treatment plant, which, depending on the requirements of the heat treatment to be carried out, can further comprise other heating or cooling stages, temperature-holding regions, degassing stations, homogenizers or the like, the liquid to be treated, for example a fruit juice or a fruit juice concentrate, is customarily fed to the preheating device (11) via the inlet (12) at a temperature in the range from 0 to 30°C, in particular at a cellar or room temperature of from 15°C to 20°C. The feed liquid to be treated, which was magnetized in a magnetizing unit which is not shown, is heated in the preheating device, using the residual heat of the sterilized or pasteurized liquid, to temperatures in the range from 50°C to 70°C, depending on what type of heat treatment is to be carried out. After the preheating, a further magnetization is carried out which stabilizes the mineral content in the liquid in such a manner that precipitation of mineral salts is prevented.

The preheated liquid to be treated is then deaerated or degassed in the degassing station (13) in order then to be homogenized in the homogenizer (14). After the mechanical treatment of the liquid in the homogenizer (14), the liquid is magnetized again by the magnetizing unit (24), before the liquid to be treated is heated in the main heating device (15) to temperatures in the range from 60°C for a simple pasteurization to 100°C for sterilization or even to 130°C or above. In order to maintain the pasteurization or sterilization temperature for a predetermined time, the liquid flows through the temperature-holding region (16) at an appropriate flow velocity in order then to be cooled in the cooling device (17) to temperatures between 70°C and 50°C. The pasteurized or sterilized liquid which has been precooled to this extent then gives off its residual heat in the preheating device (11) to the incoming liquid which is still to be treated, in order then to be packaged at temperatures of around 20°C or 30°C.

If for hygiene reasons, higher packaging temperatures are required, it is also possible to dispense with the utilization of the residual heat of the treated liquid and to package this at relatively high temperatures after the precooling.

Magnetizing the liquid to be treated, that is preferably the fruit juice drinks or fruit juice concentrates, again each time after a thermal or mechanical treatment restabilizes minerals, in particular calcium and magnesium, which are present in the fruit juice drink or fruit juice concentrate as calcium citrate malate or magnesium citrate malate, so that the equilibrium of these complexes cannot be destroyed, or virtually cannot be destroyed, by a following thermal or mechanical treatment, to the extent that calcium citrate, calcium malate, magnesium citrate or magnesium malate precipitate out.

The stabilizing action of the magnetization on the dissolved mineral salts is particularly advantageous in the case of fruit juice drinks having a mineral content in the range up to 1.5 g/l and having a pH below 4.5 and in the case of fruit juice concentrates having a mineral content in the range up to 10.0 g/l and a corresponding pH, since here, otherwise, precipitation of mineral salts occurs particularly readily with thermal or mechanical treatment as a consequence of the high concentration.

According to the invention, therefore, not only may blockage of the heat-treatment plant with mineral salts be prevented, but at the same time the mineral content in the fruit juice drink or fruit juice concentrate may be maintained in a form utilizable by the human body.

## Claims

1. Heat-treatment process for liquids, in particular for sterilizing or pasteurizing beverages and other liquid foods, in which
- the liquid conducted in lines is heated in a heating region (15) to a predetermined temperature in accordance with the heat treatment to be carried out,
- is held at the temperature achieved in a temperature-holding region (16) for a preset time in accordance with the heat treatment to be carried out and
- is then cooled in a cooling region (17),
characterized in that
- the liquid magnetized upstream of the heating in the heating region (15) is again exposed downstream of the heating to a magnetic field which magnetizes it.

2. Heat-treatment process according to Claim 1, characterized in that the liquid to be treated is exposed again to a magnetic field which magnetizes it after each passage through a mechanical transport or treatment unit (14).

3. Heat-treatment process according to Claim 1 or 2, characterized in that the liquid to be treated which contains undissolved matter is subjected to a mechanical treatment for the uniform mixing of its constituents, in particular to homogenization, and is then magnetized again.

4. Heat-treatment process according to Claims 1, 2 or 3, characterized in that a static magnetic field is used to magnetize the liquid to be treated.

5. Heat-treatment process according to Claims 1, 2 or 3, characterized in that an alternating magnetic field is used to magnetize the liquid to be treated.

6. Heat-treatment process according to Claim 4 or 5, characterized in that the magnetic fields used to magnetize the liquid to be treated are generated using controllable electromagnetic arrangements.

7. Heat-treatment process according to Claim 6, characterized in that the strength and/or the frequency of the magnetic fields used are adjustable as a function of the flow rate and/or the temperature of the liquid to be treated.

8. Heat-treatment process according to one of the preceding claims, characterized in that the liquid to be treated is fruit juice, a fruit-juice-based drink or a fruit-juice concentrate.

9. Heat-treatment process according to one of the preceding claims, characterized in that the liquid to be treated is enriched with minerals.

10. Heat-treatment process according to Claim 9, characterized in that the liquid to be treated is enriched with minerals in a form utilizable by the human body.

11. Heat-treatment process according to one of the preceding claims, characterized in that the liquid to be treated has an Mg and/or Ca concentration of from 0.5 g/l to 10.0 g/l and preferably from 1.0 g/l to 7.0 g/l.
